(19) **Europäisches Patentamt**
**European Patent Office**
**Office européen des brevets**

(11) **EP 1 515 864 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(21) Anmeldenummer: **02790261.8**

(22) Anmeldetag: **26.11.2002**

(51) Int Cl.:
**B60K 31/00** *(2006.01)*

(86) Internationale Anmeldenummer:
**PCT/DE2002/004331**

(87) Internationale Veröffentlichungsnummer:
**WO 2003/106208 (24.12.2003 Gazette 2003/52)**

(54) **VERFAHREN UND VORRICHTUNG ZUR BEGRENZUNG DER FAHRGESCHWINDIGKEIT EINES KRAFTFAHRZEUGS**

METHOD AND DEVICE FOR LIMITING THE DRIVING SPEED OF A MOTOR VEHICLE

PROCEDE ET DISPOSITIF DE LIMITATION DE LA VITESSE D'UN VEHICULE AUTOMOBILE

(84) Benannte Vertragsstaaten:
**DE FR IT**

(72) Erfinder: **KUSTOSCH, Mario**
**71665 Vaihingen/Enz (DE)**

(30) Priorität: **15.06.2002 DE 10226678**

(43) Veröffentlichungstag der Anmeldung:
**23.03.2005 Patentblatt 2005/12**

(73) Patentinhaber: **ROBERT BOSCH GMBH**
**70442 Stuttgart (DE)**

(56) Entgegenhaltungen:
**DE-A- 3 236 990        DE-A- 4 344 369**
**DE-A- 10 024 231        DE-A- 19 632 337**
**FR-A- 2 813 050        US-A- 4 463 427**

EP 1 515 864 B1

**Beschreibung**

Stand der Technik

Die Erfindung geht von einem Verfahren und einer Vorrichtung zur Begrenzung der Fahrgeschwindigkeit eines Kraftfahrzeugs aus.

Aus der WO-A-03/59677 (Stand der Technik nach Art. 54(3)EPÜ) ist bereits ein Verfahren zur Begrenzung der Fahrgeschwindigkeit eines Kraftfahrzeugs bekannt.

Ein anderes Verfahren ist aus der DE-A-10024231 bekannt.

Vorteile der Erfindung

Das erfindungsgemäße Verfahren und die erfindungsgemäße Vorrichtung zur Begrenzung der Fahrgeschwindigkeit eines Kraftfahrzeugs mit den Merkmalen der unabhängigen Ansprüche haben demgegenüber den Vorteil, dass die Fahrgeschwindigkeit auf einen maximalen Wert begrenzt wird, bei dem ein für stationäre Fahrgeschwindigkeit vorgegebener maximaler Kraftstoffverbrauch nicht überschritten wird. Auf diese Weise lässt sich ein einstellbarer stationärer Kraftstoffverbrauch einhalten, ohne kurzfristige Beschleunigungen zu begrenzen. Somit lässt sich eine ökonomische Fahrweise nach Maßgabe des Fahrers des Fahrzeugs automatisieren.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn der maximale Wert für die Fahrgeschwindigkeit aus einer maximalen Antriebskraft des Fahrzeugs, die aus dem Verhältnis zwischen dem vorgegebenen maximalen Kraftstoffverbrauch und einem spezifischen Kraftstoffverbrauch des Motors im aktuellen Betriebspunkt resultiert, mittels einer inversen Kennlinie für einen geschwindigkeitsabhängigen Anteil des Fahrwiderstandes ermittelt wird. Auf diese Weise lässt sich der maximale Wert für die Fahrgeschwindigkeit besonders einfach und wenig aufwendig ermitteln. Besonders vorteilhaft ist es, wenn die maximale Antriebskraft durch einen geschwindigkeitsunabhängigen Anteil des Fahrwiderstandes korrigiert wird. Auf diese Weise wird die Genauigkeit der Ermittlung des maximalen Wertes für die Fahrgeschwindigkeit erhöht.

Ein weiterer Vorteil besteht darin, dass der geschwindigkeitsunabhängige Anteil des Fahrwiderstandes gefiltert wird, insbesondere mit einem Tiefpass erster Ordnung. Auf diese Weise können Rauscheinflüsse bei der Berechnung des geschwindigkeitsunabhängigen Anteils des Fahrwiderstandes weitgehend geglättet werden.

Besonders vorteilhaft ist es außerdem, wenn die Begrenzung der Fahrgeschwindigkeit in Abhängigkeit des vorgegebenen maximalen Kraftstoffverbrauchs nur dann durchgeführt wird, wenn der Gradient einer Fahrpedalstellung einen vorgegebenen Wert unterschreitet oder eine Kick-Down-Funktion deaktiviert ist. Auf diese Weise wird sichergestellt, dass in Fahrsituationen, in denen es dem Fahrer primär auf das Erreichen einer möglichst hohen Fahrgeschwindigkeit ankommt, die kraftstoffverbrauchsabhängige Begrenzung der Fahrgeschwindigkeit außer Kraft gesetzt wird. Somit wird die Fahrsicherheit, beispielsweise bei Überholvorgängen, gewährleistet.

Zeichnung

Ein Ausführungsbeispiel der Erfindung ist in der Zeichnung dargestellt und in der nachfolgenden Beschreibung näher erläutert.

Es zeigen

Figur 1     ein Blockschaltbild einer Fahrgeschwindigkeitsbegrenzung mit der erfindungsgemäßen Vorrichtung und

Figur 2     ein Funktionsdiagramm zur Beschreibung des Aufbaus der erfindungsgemäßen Vorrichtung und des Ablaufs des erfindungsgemäßen Verfahrens.

Beschreibung des Ausführungsbeispiels

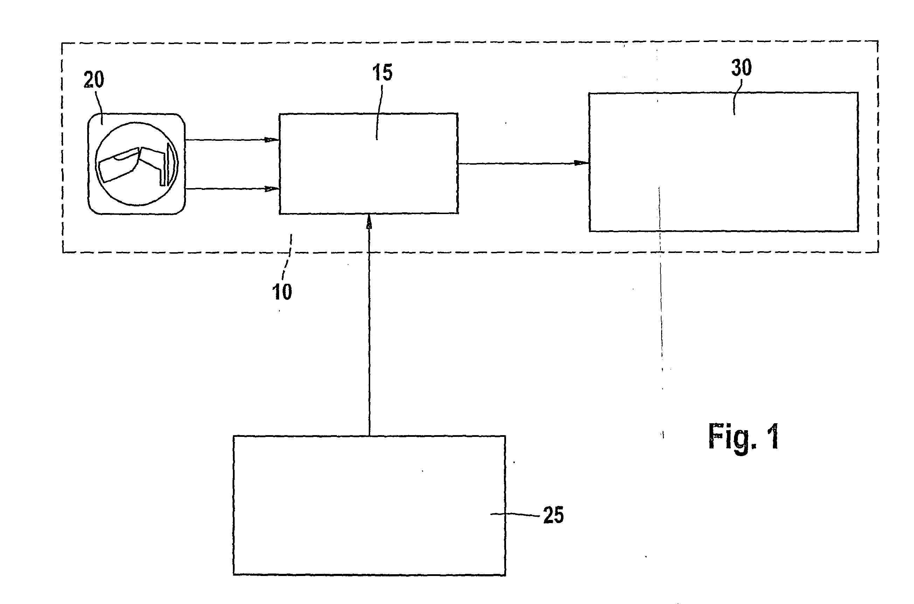

In Figur 1 ist eine Anordnung zur Geschwindigkeitsbegrenzung in einem Kraftfahrzeug in Form eines Blockschaltbildes dargestellt. Dabei ist eine Vorrichtung 10 zur Begrenzung der Fahrgeschwindigkeit des Kraftfahrzeugs vorgesehen. Die Vorrichtung 10 umfasst eine Eingabe-/Bedieneinheit 20, die mit Mitteln 15 zur Ermittlung eines maximalen Wertes vmaxbe, auf den die Fahrgeschwindigkeit begrenzt sein soll, verbunden ist. Der maximale Wert vmaxbe für die Fahrgeschwindigkeit wird von den Mitteln 15 an Mittel 30 abgegeben, die die eigentliche Geschwindigkeitsbegrenzungsfunktion realisieren. Die Mittel 30 stellen dabei sicher, dass die aktuelle Fahrgeschwindigkeit des Kraftfahrzeugs den maximalen Wert vmaxbe für die Fahrgeschwindigkeit nicht überschreitet. Über die Eingabe-/Bedieneinheit 20 kann der Fahrer des Kraftfahrzeugs einen maximalen Kraftstoffverbrauch Besoll für eine stationäre Fahrgeschwindigkeit vorgeben. Weiterhin kann der Fahrer an der Eingabe-/Bedieneinheit 20 die Mittel 15 derart aktivieren, dass sie den maximalen Wert vmaxbe für die Fahrgeschwindigkeit in Abhängigkeit des für stationäre Fahrgeschwindigkeit vorgegebenen maximalen Kraftstoffverbrauchs Besoll ermitteln. Zur Aktivierung der Mittel 15 erzeugt die Eingabe-/Bedieneinheit 20 ein Aktivierungssignal "EIN". Entsprechend kann der Fahrer an der Eingabe-/Bedieneinheit 20 die Mittel 15 derart deaktivieren, dass der maximale Wert vmaxbe für die Fahrgeschwindigkeit nicht in Abhängigkeit des für stationäre Fahrgeschwindigkeit vorgegebenen maximalen Kraftstoffverbrauchs Besoll ermittelt wird. Zu diesem Zweck erzeugt die Eingabe-/Bedieneinheit für die Mittel 15 ein Deaktivierungssignal "AUS".

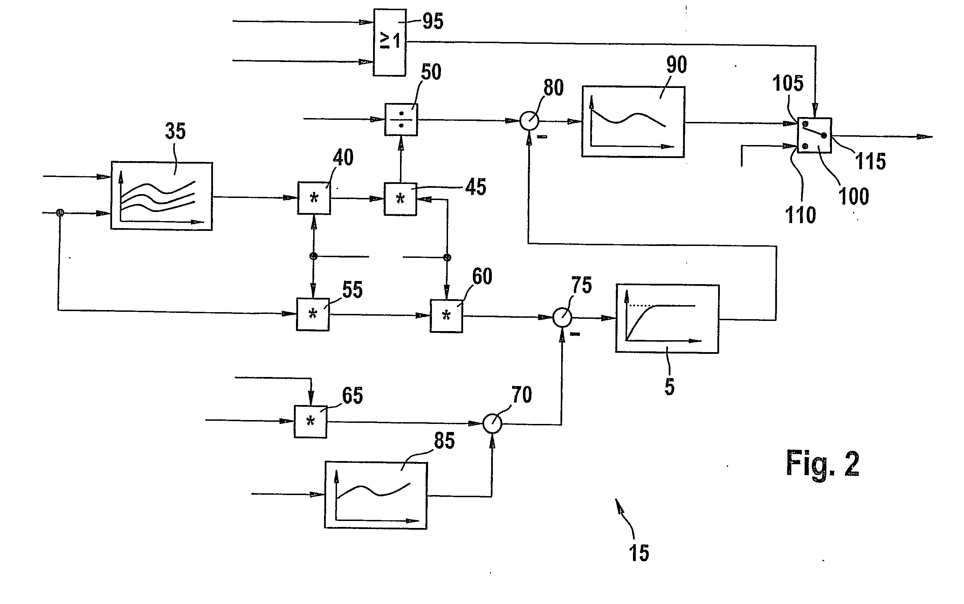

Ferner ist in Figur 1 eine Motorsteuerung 25 dargestellt, die der Vorrichtung 10 und dort den Mitteln 15 Werte für einen Getriebeübersetzungsfaktor üist, eine Motordrehzahl nmot, ein Motoristmoment Miist, eine Istbeschleunigung aist des Fahrzeugs, eine Istgeschwindigkeit vist des Fahrzeugs und ein Bit B_kdown, das anzeigt, ob ein Kick-Down des Fahrzeugs bei Verwendung eines Automatikgetriebes betätigt wurde, übergibt. Die Ermittlung der Werte für den Getriebeübersetzungsfaktor üist, die Motordrehzahl nmot, das Motoristmoment Miist, die Istbeschleunigung aist und die Istgeschwindigkeit vist erfolgt in aus dem Stand der Technik bekannter Weise. Das Bit B_kdown für die Betätigung des Kick-Down wird bei Betätigung des Kick-Down gesetzt und ist andernfalls zurückgesetzt. In Figur 2 ist ein Funktionsdiagramm zur Beschreibung des Aufbaus der Mittel 15 sowie des Ablaufs des erfindungsgemäßen Verfahrens dargestellt. Dabei ist ein Motorverbrauchskennfeld 35 vorgesehen, dem die Motordrehzahl nmot und das Motoristmoment Miist als Eingangsgrößen zugeführt sind. Als Ausgangsgröße ergibt sich ein spezifischer Kraftstoffverbrauch beENG des Motors des Fahrzeugs im aktuellen Betriebspunkt, der durch die Motordrehzahl nmot und das Motoristmoment Miist gekennzeichnet ist. Das Motorverbrauchskennfeld 35 wird standardmäßig für jeden Motor von dessen Hersteller ermittelt und ist daher aus dem Stand der Technik bekannt. In einem ersten Verknüpfungspunkt 40 wird der spezifische Kraftstoffverbrauch beENG des Motors mit dem Getriebeübersetzungsfaktor üist multipliziert. Das Multiplikationsergebnis wird in einem zweiten Verknüpfungspunkt 45 mit einem Radradius $r_{Rad}$ der Räder des Fahrzeugs multipliziert, wobei der Radradius $r_{Rad}$ in den Mitteln 15 bekannt und dort gespeichert oder in der Motorsteuerung 25 bekannt und von dort zu den Mitteln 15 übertragen werden kann. Das Multiplikationsergebnis ist in Figur 2 mit bePT gekennzeichnet und wird einem dritten Verknüpfungspunkt 50 zugeführt. Im dritten Verknüpfungspunkt 50 wird der Quotient aus dem für stationäre Fahrgeschwindigkeit vorgegebenen maximalen Kraftstoffverbrauch Besoll und dem Multiplikationsergebnis bePT gebildet, so dass sich eine maximale Antriebskraft $F_{BEsoll}$ des Fahrzeugs wie folgt ergibt:

$$F_{BEsoll} = Besoll \ / \ bePT \tag{1}$$

Das Motoristmoment Miist wird außerdem einem vierten Verknüpfungspunkt 55 zugeführt und dort mit dem Getriebeübersetzungsfaktor üist multipliziert. Das Multiplikationsergebnis wird einem fünften Verknüpfungspunkt 60 zugeführt und dort mit dem Radradius $r_{Rad}$ multipliziert. Das Multiplikationsergebnis ist die aktuelle Antriebskraft FAN des Fahrzeugs.

In einem sechsten Verknüpfungspunkt 65 wird die Istbeschleunigung aist des Fahrzeugs mit der Fahrzeugmasse MFzg multipliziert. Das Multiplikationsergebnis ist die Trägheitskraft T des Fahrzeugs. Die Fahrzeugmasse MFzg kann in den Mitteln 15 bekannt und dort gespeichert sein. Alternativ kann die Fahrzeugmasse MFzg in der Motorsteuerung 25 bekannt sein und von dort an die Mittel 15 übertragen werden. Die Istgeschwindigkeit vist des Fahrzeugs ist einer ersten Kennlinie 85 als Eingangsgröße zugeführt. Die erste Kennlinie 85 liefert aus der Istgeschwindigkeit vist einen geschwindigkeitsabhängigen Anteil fv des Fahrwiderstandes des Fahrzeugs. In einem siebten Verknüpfungspunkt 70 werden die Trägheitskraft T und der geschwindigkeitsabhängige Anteil fv des Fahrwiderstandes miteinander addiert. Das Additionsergebnis wird in einem achten Verknüpfungspunkt 75 von der aktuellen Antriebskraft FAN des Fahrzeugs subtrahiert. Das Subtraktionsergebnis wird einem Filter 5 zugeführt, um Rauscheinflüsse auf den Messwert für die Istbeschleunigung aist zu glätten und schnelle Änderungen des maximalen Wertes vmaxbe für die Fahrgeschwindigkeit zu verhindern. Bei dem Filter 5 kann es sich beispielsweise um einen Tiefpass erster Ordnung handeln. Das geglättete Ausgangssignal des Filters 5 wird als geschwindigkeitsunabhängiger Anteil $F\alpha$ des Fahrwiderstandes einem neunten Verknüpfungspunkt 80 zugeführt und dort von der maximalen Antriebskraft $F_{BEsoll}$ subtrahiert. Das Subtraktionsergebnis wird als Eingangsgröße einer zweiten Kennlinie 90 zugeführt, die zur ersten Kennlinie 85 invers ist und einen Geschwindigkeitswert $fv^{-1}$ liefert, der einem ersten Eingang 105 eines gesteuerten Schalters 100 zugeführt ist. Einem zweiten Eingang 110 des gesteuerten Schalters 100 ist eine vorgegebene absolute Höchstgeschwindigkeit VMAX zugeführt, die entweder fest voreingestellt ist oder ebenfalls vom Benutzer an der Eingabe-/Bedieneinheit 20 vorgegeben werden kann. Der gesteuerte Schalter 100 wird über ein ODER-Gatter 95 angesteuert, dem als Eingangsgrößen das Deaktivierungssignal "AUS" und das Bit B_kdown für den Kick-Down zugeführt sind. Ist eine der beiden Eingangsgrößen "AUS", B_kdown des ODER-Gatters 95 gesetzt, d.h. wird der Kick-Down betätigt oder hat der Fahrer an der Eingabe-/Bedieneinheit 20 die Vorgabe des maximalen Wertes vmaxbe für die Fahrgeschwindigkeit in Abhängigkeit des für stationäre Fahrgeschwindigkeit vorgegebenen maximalen Kraftstoffverbrauchs Besoll deaktiviert, so ist der Ausgang des ODER-Gatters gesetzt und veranlasst den gesteuerten Schalter 100 zur Verbindung des zweiten Eingangs 110 mit dem Ausgang 115 des gesteuerten Schalters 100. Als maximaler Wert vmaxbe für die Fahrgeschwindigkeit wird in diesem Fall die vorgegebene absolute Höchstgeschwindigkeit VMAX den Mitteln 30 zugeführt. Ist hingegen der Ausgang des ODER-Gatters 95 zurückgesetzt, d.h. weder der Kick-Down betätigt noch die Ermittlung des maximalen Wertes vmaxbe für die Fahrgeschwindigkeit in Abhängigkeit des für stationäre Fahrgeschwindigkeit vorgegebenen maximalen Kraftstoffverbrauchs Besoll vom Fahrer an der Eingabe-/Bedieneinheit 20 deaktiviert, so wird durch den zurückgesetzten Ausgang des ODER-Gatters 95 der gesteuerte Schalter 100 dazu veranlasst, den ersten Eingang 105 mit dem Ausgang 115 zu verbinden, so dass der Ausgang fv$^{-1}$ der zweiten Kennlinie 90 als maximaler Wert vmaxbe für die Fahrgeschwindigkeit den Mitteln 30 zugeführt wird.

Die durch die Mittel 30 realisierte Geschwindigkeitsbegrenzungsfunktion ist eine Funktion der Fahrzeuglängsbewegung, die dem Fahrer die Vorgabe eines maximalen Wertes vmaxbe für die Fahrgeschwindigkeit ermöglicht, der von der Istgeschwindigkeit vist des Fahrzeugs nicht überschritten werden soll. Dies nutzt sowohl der Fahrsicherheit, als auch dem Kraftstoffverbrauch. Möchte der Fahrer die Geschwindigkeitsbegrenzungsfunktion zur Beschränkung auf einen gewünschten Kraftstoffverbrauch nutzen, so ist dies durch die Vorgabe des maximalen Wertes vmaxbe für die Fahrgeschwindigkeit allein nicht möglich, da der Kraftstoffverbrauch auch von geschwindigkeitsunabhängigen Parametern, wie zum Beispiel der Steigung, dem Motorbetriebspunkt oder vom Gegenwind, abhängt. Der Kraftstoffverbrauch ist in diesem Ausführungsbeispiel ein Kraftstoffstreckenverbrauch, d.h. ein Kraftstoffverbrauch pro zurückgelegter Fahrtstrecke, also beispielsweise der Kraftstoffverbrauch pro 100 km zurückgelegter Fahrtstrecke.

Durch die hier beschriebenen Mittel 15 wird der maximale Wert vmaxbe für die Fahrgeschwindigkeit als Ausgang fv$^{-1}$ der zweiten Kennlinie 90 so berechnet, dass der für stationäre Fahrgeschwindigkeit vorgegebene maximale Kraftstoffverbrauch Besoll nicht überschritten wird. Der Istwert Be für den Kraftstoffverbrauch pro zurückgelegter Fahrtstrecke berechnet sich nach der Formel:

$$Be = \left[\, beENG(nmot, Miist) * \int (Froll(vist) + Fair(vist) + MFzg * aist + Fbr + F\alpha) * vist \, dt \,\right] / \int vist \, dt \quad (2)$$

Ziel ist es, die Gleichung (2) nach der Istgeschwindigkeit vist aufzulösen. Ersetzt man dann den Istwert Be für den Kraftstoffverbrauch pro zurückgelegter Fahrtstrecke durch den für stationäre Fahrgeschwindigkeit vorgegebenen maximalen Kraftstoffverbrauch Besoll, dann erhält man statt der Istgeschwindigkeit den für den vorgegebenen maximalen Kraftstoffverbrauch Besoll gültigen maximalen Wert vmaxbe für die Fahrgeschwindigkeit. Dabei soll die Fahrzeugbeschleunigung unterhalb des maximalen Wertes vmaxbe für die Fahrgeschwindigkeit nicht in Abhängigkeit des vorgegebenen maximalen Kraftstoffverbrauch Besoll begrenzt werden, um die Agilität des Fahrzeugs nicht zu gefährden. Deshalb wird nur der maximale Wert vmaxbe für die Fahrgeschwindigkeit berechnet, der sich im stationären Antriebsfall ergibt, d.h. in dem die Istbeschleunigung aist des Fahrzeugs gleich Null ist und die Bremskraft Fbr des Fahrzeugs in Gleichung (2) ebenfalls gleich Null ist. Der Fahrwiderstand des Fahrzeugs besteht aus dem geschwindigkeitsabhängigen Anteil fv, der sich aus dem Rollwiderstand Froll und dem Luftwiderstand Fair in Gleichung (2) zusammensetzt, sowie aus dem geschwindigkeitsunabhängigen Anteil F$\alpha$, der aus dem Steigungswiderstand und der Kraft durch Gegenwind besteht. Wird also die Istbeschleunigung aist und die Bremskraft Fbr jeweils zu Null gesetzt in Gleichung (2), so ergibt sich daraus:

$$Be = \left[\, beENG(nmot, Miist) * \left[\, \int (Froll(vist) + Fair(vist)\,) * vist \, dt + F\alpha * vist \, dt \,\right] \right] / \int vist \, dt \quad (3)$$

Aus Gleichung (3) ergibt sich wiederum:

$$Be / beENG(nmot, Miist) - F\alpha = \int (Froll(vist) + Fair(vist)\,) * vist \, dt / \int vist \, dt \quad (4)$$

Die rechte Seite der Gleichung (4) entspricht der mittleren Kraft, die durch den Rollwiderstand Froll und den Luftwiderstand Fair entsteht. Der Quotient auf der linken Seite der Gleichung kann nach Multiplikation mit dem Getriebeübersetzungsfaktor üist und dem Radradius $r_{Rad}$ als eine Antriebskraft $F_{Be}$ des Fahrzeugs interpretiert werden, die aus dem Istwert Be des Kraftstoffverbrauchs pro zurückgelegter Fahrtstrecke bezogen auf den spezifischen Kraftstoffverbrauch BeENG des Motors im aktuellen Betriebspunkt resultiert. Die rechte Seite der Gleichung (4) kann in einem Fahrzeugexperiment als erste Kennlinie fv(vist) über der Istgeschwindigkeit vist ermittelt werden. Bei der Ermittlung kann dabei folgendermaßen vorgegangen werden:

Das Fahrzeug wird bei Windstille, auf ebener Fahrbahn, bei stationärer Istgeschwindigkeit vist betrieben. Für einen beliebigen Zeitraum wird dann die aktuelle Antriebskraft FAN des Fahrzeugs aus dem Motoristmoment Miist, wie in Figur 2 mit Hilfe des vierten Verknüpfungspunktes 55 und des fünften Verknüpfungspunktes 60 dargestellt, ermittelt. Das beschriebene Fahrzeugexperiment wird für mehrere Istgeschwindigkeiten vist des Fahrzeugs durchgeführt, die das gesamte Spektrum der möglichen Istgeschwindigkeiten vist des Fahrzeugs mit hinreichender Dichte abdecken. Auf diese Weise wird die erste Kennlinie 85 gebildet. Die Istgeschwindigkeiten vist des Fahrzeugs stellen dann die Stützstellen der ersten Kennlinie 85 dar.

Anhand des beschriebenen Fahrzeugexperimentes ergibt sich somit aus Gleichung (4) die folgende Beziehung:

$$Be \ / \ beENG\,(nmot, Miist) - F\alpha = fv(vist) \qquad (5)$$

Die Fahrwiderstände als Funktion über der Istgeschwindigkeit vist des Fahrzeugs sind monoton steigend. Daher lässt sich die erste Kennlinie 85, die der Funktion fv(vist) entspricht, invertieren. Die Invertierung der ersten Kennlinie 85 entspricht dann der Funktion fv$^{-1}$(vist) und entspricht der zweiten Kennlinie 90. Die zweite Kennlinie 90 ermöglicht das Auflösen der Gleichung (5) nach der Istgeschwindigkeit vist des Fahrzeugs:

$$vist = fv^{-1}\,(Be \ / \ beENG\,(nmot, Miist) - F\alpha \quad) \qquad (6)$$

Wird jetzt der Istwert Be für den Kraftstoffverbrauch pro zurückgelegter Fahrtstrecke durch den für stationäre Fahrgeschwindigkeit vorgegebenen maximalen Kraftstoffverbrauch Besoll ersetzt, so ergibt sich in Gleichung (6) anstelle der Istgeschwindigkeit vist des Fahrzeugs der maximale Wert vmaxbe für die Fahrgeschwindigkeit als Ausgang fv$^{-1}$ der zweiten Kennlinie 90. Dies ist in der folgenden Gleichung dargestellt:

$$v\,max\,be = fv^{-1}\,(Besoll \ / \ beENG\,(nmot, Miist) - F\alpha) \qquad (7)$$

Das Motorverbrauchskennfeld 35 ist in Gleichung (7) als BeENG (nmot, Miist) beschrieben und wird wie beschrieben standardmäßig für jeden Motor von dessen Hersteller ermittelt und ist somit in den Mitteln 15 in aus dem Stand der Technik bekannter Weise vorgegeben. Der für stationäre Fahrgeschwindigkeit vorgegebene maximale Kraftstoffverbrauch

Besoll kann an der Eingabe-/Bedieneinheit 20 vom Fahrer vorgegeben werden. Es muss also nur noch der geschwindigkeitsunabhängige Anteil Fα des Fahrwiderstandes berechnet werden. Der geschwindigkeitsunabhängige Anteil Fα des Fahrwiderstandes kann gemäß Figur 2 aus der Kräftebilanz am Fahrzeug berechnet werden, indem von der aktuellen Antriebskraft FAN des Fahrzeugs der geschwindigkeitsabhängige Anteil fv des Fahrwiderstands und die Trägheitskraft T repräsentiert durch MFzg * aist subtrahiert wird, gemäß folgender Gleichung:

$$F\alpha = FAN - fv(vist) - MFzg * aist \qquad (8)$$

Die aktuelle Antriebskraft FAN des Fahrzeugs kann aus dem Motoristmoment Miist, dem Getriebeübersetzungsfaktor üist und dem Radradius $R_{Rad}$ in der gemäß Figur 2 beschriebenen Weise gebildet werden. Um ein nervöses Fahrzeugverhalten durch schnelle Änderungen des maximalen Wertes vmaxbe für die Fahrgeschwindigkeit aufgrund eines verrauschten Wertes für die Istbeschleunigung aist zu verhindern, wird der geschwindigkeitsunabhängige Anteil Fα des Fahrwiderstandes gemäß Figur 2 gefiltert, beispielsweise durch einen Tiefpass erster Ordnung. Wie in Figur 2 dargestellt und zu Figur 2 beschrieben, wird die Begrenzung der Fahrgeschwindigkeit in Abhängigkeit des vorgegebenen maximalen Kraftstoffverbrauchs Besoll nur dann durchgeführt, wenn eine Kick-Down-Funktion deaktiviert ist, d.h. das Bit B_kdown zurückgesetzt ist. Zusätzlich oder alternativ kann es vorgesehen sein, die Begrenzung der Fahrgeschwindigkeit in Abhängigkeit des vorgegebenen maximalen Kraftstoffverbrauchs Besoll nur dann durchzuführen, wenn der Gradient einer Fahrpedalstellung einen vorgegebenen Wert unterschreitet. Überschreitet der Gradient der Fahrpedalstellung den vorgegebenen Wert, so wird erkannt, dass der Fahrer möglichst schnell beschleunigen will, ähnlich wie bei der Kick-Down-Funktion, so dass auch in diesem Fall die Begrenzung der Fahrgeschwindigkeit in Abhängigkeit des vorgegebenen maximalen Kraftstoffverbrauchs Besoll aufgegeben werden soll und statt dessen die Fahrgeschwindigkeit durch die vorgegebene absolute Höchstgeschwindigkeit VMAX begrenzt werden soll. Weiterhin kann es, wie zu Figur 2 beschrieben, vorgesehen sein, dass die Begrenzung der Fahrgeschwindigkeit in Abhängigkeit des vorgegebenen maximalen Kraftstoffverbrauchs Besoll nur dann durchgeführt wird, wenn der Fahrer an der Eingabe-/Bedieneinheit 20 die Mittel 15 unter Setzen des Aktivierungssignals "EIN" auch aktiviert hat. In diesem Fall ist das Deaktivierungssignal "AUS" zurückgesetzt. Für den Fall, dass der Fahrer an der Eingabe-/Bedieneinheit 20 die Mittel 15 durch setzen des Deaktivierungssignals "AUS" deaktiviert, soll, wie zu Figur 2 beschrieben, die Begrenzung der Fahrgeschwindigkeit nicht in Abhängigkeit des vorgegebenen maximalen Kraftstoffverbrauchs Besoll durchgeführt werden, sondern statt dessen die Begrenzung der Fahrgeschwindigkeit durch die vorgegebene absolute Höchstgeschwindigkeit VMAX realisiert werden.

## Patentansprüche

1. Verfahren zur Begrenzung der Fahrgeschwindigkeit eines Kraftfahrzeugs, wobei die Fahrgeschwindigkeit auf einen maximalen Wert (vmaxbe) begrenzt wird, bei dem ein für stationäre Fahrgeschwindigkeit vorgegebener maximaler Kraftstoffverbrauch (Besoll) nicht überschritten wird, und für eine Fahrgeschwindigkeit unterhalb des maximalen Wertes (vmaxbe) die Fahrzeugbeschleunigung nicht in Abhängigkeit des vorgegebenen maximalen Kraftstoffverbrauchs (Besoll) begrenzt wird.

2. Verfahren nach Anspruch 1, **dadurch gekennzeichnet, dass** der maximale Wert (vmaxbe) für die Fahrgeschwindigkeit aus einer maximalen Antriebskraft ($F_{BEsol}$) des Fahrzeugs, die aus dem Verhältnis zwischen dem vorgegebenen maximalen Kraftstoffverbrauch (Besoll) und einem spezifischen Kraftstoffverbrauch (beENG) des Motors im aktuellen Betriebspunkt resultiert, mittels einer inversen Kennlinie ($fv^{-1}$) für einen geschwindigkeitsabhängigen Anteil (fv) des Fahrwiderstandes ermittelt wird.

3. Verfahren nach Anspruch 2, **dadurch gekennzeichnet, dass** die maximale Antriebskraft ($F_{BEsol}$) des Fahrzeugs durch einen geschwindigkeitsunabhängigen Anteil ($F\alpha$) des Fahrwiderstandes korrigiert wird.

4. Verfahren nach Anspruch 3, **dadurch gekennzeichnet, dass** der geschwindigkeitsunabhängige Anteil ($F\alpha$) des Fahrwiderstandes aus einer aktuellen Antriebskraft (FAN) des Fahrzeugs abzüglich des geschwindigkeitsabhängigen Anteils (fv) des Fahrwiderstandes und der Trägheitskraft des Fahrzeugs ermittelt wird.

5. Verfahren nach Anspruch 3 oder 4, **dadurch gekennzeichnet, dass** der geschwindigkeitsunabhängige Anteil ($F\alpha$) des Fahrwiderstandes gefiltert wird, insbesondere mit einem Tiefpass (5) erster Ordnung.

6. Verfahren nach Anspruch 4 oder 5, **dadurch gekennzeichnet, dass** die aktuelle Antriebskraft (FAN) aus einem Motoristmoment (Miist), einem Radradius ($r_{Rad}$) und einem Getriebeübersetzungsfaktor (üist) ermittelt wird.

7. Verfahren nach einem der Ansprüche 2 bis 6, **dadurch gekennzeichnet, dass** der spezifische Kraftstoffverbrauch (beENG) aus einem Kennfeld in Abhängigkeit einer Motordrehzahl (nmot) und einem Motoristmoment (Miist) ermittelt wird.

8. Verfahren nach einem der vorherigen Ansprüche, **dadurch gekennzeichnet, dass** die Begrenzung der Fahrgeschwindigkeit in Abhängigkeit des vorgegebenen maximalen Kraftstoffverbrauchs (Besoll) nur dann durchgeführt wird, wenn der Gradient einer Fahrpedalstellung einen vorgegebenen Wert unterschreitet oder eine Kickdownfunktion (B_kdown) deaktiviert ist.

9. Vorrichtung (10) zur Begrenzung der Fahrgeschwindigkeit eines Kraftfahrzeugs, wobei Mittel (15, 30) zur Begrenzung der Fahrgeschwindigkeit auf einen maximalen Wert (vmaxbe) vorgesehen sind, bei dem ein für stationäre Fahrgeschwindigkeit vorgegebener maximaler Kraftstoffverbrauch (Besoll) nicht überschritten wird, und für eine Fahrgeschwindigkeit unterhalb des maximalen Wertes (vmaxbe) keine Begrenzung der Fahrzeugbeschleunigung in Abhängigkeit des vorgegebenen maximalen Kraftstoffverbrauchs (Besoll) erfolgt.

## Claims

1. Method for limiting the driving speed of a motor vehicle, wherein the driving speed is limited to a maximum value (vmaxbe) at which a maximum fuel consumption (Besoll) which is predefined for a steady-state driving speed is not exceeded, and wherein, for a driving speed below the maximum value (vmaxbe), the acceleration of the vehicle is not limited as a function of the predefined, maximum fuel consumption (Besoll).

2. Method according to Claim 1, **characterized in that** the maximum value (vmaxbe) for the driving speed is determined, by means of an inverse characteristic diagram ($fv^{-1}$) for a speed-dependent component (fv) of the travelling resistance, from a maximum drive force ($F_{BEsol}$) of the vehicle, which results from the ratio between the predefined maximum fuel consumption (Besoll) and a specific fuel consumption (beENG) of the engine at the current operating point.

3. Method according to Claim 2, **characterized in that** the maximum drive force ($F_{BEsol}$) of the vehicle is corrected by a speed-independent component ($F\alpha$) of the travelling resistance.

4. Method according to Claim 3, **characterized in that** the speed-independent component ($F\alpha$) of the travelling resistance is determined from a current drive force (FAN) of the vehicle minus the speed-dependent component (fv) of the travelling resistance and the force of inertia of the vehicle.

5. Method according to Claim 3 or 4, **characterized in that** the speed-independent component ($F\alpha$) of the travelling resistance is filtered, in particular with a first order low-pass filter (5).

6. Method according to Claim 4 or 5, **characterized in that** the current drive force (FAN) is determined from an engine actual torque (Miist), a wheel radius ($r_{Rad}$) and a gearbox transmission factor (üist).

7. Method according to one of Claims 2 to 6, **characterized in that** the specific fuel consumption (beENG) is determined from a characteristic diagram as a function of an engine speed (nmot) and an engine actual torque (Miist).

8. Method according to one of the preceding claims, **characterized in that** the driving speed is limited as a function of the predefined maximum fuel consumption (Besoll) only if the gradient of a position of the accelerator pedal becomes less than a predefined value or a kick down function (B_kdown) is deactivated.

9. Device (10) for limiting the driving speed of a motor vehicle, wherein means (15, 30) for limiting the driving speed to a maximum value (vmaxbe) are provided, in which means a maximum fuel consumption (Besoll) which is predefined for a steady-state driving speed is not exceeded, and wherein the acceleration of the vehicle is not limited as a function of the predefined maximum fuel consumption (Besoll) for a driving speed below the maximum value (vmaxbe).

**Revendications**

1. Procédé de limitation de la vitesse d'un véhicule automobile, selon lequel p, limite la vitesse de conduite à une valeur maximale (vmaxbe) permettant de ne pas dépasser une consommation de carburant maximale (Besoll) prédéterminée pour une vitesse de conduite stationnaire alors que pour une vitesse de conduite inférieure à la valeur maximale (vmaxbe), on ne limite pas l'accélération du véhicule en fonction de la consommation de carburant maximale prédéterminée (Besoll).

2. Procédé selon la revendication 1,
   **caractérisé en ce qu'**
   on détermine la valeur maximale (vmaxbe) de la vitesse de conduite à partir d'une force motrice maximale ($F_{BEsol}$) du véhicule, qui résulte du rapport entre la consommation de carburant maximale prédéterminée (Besoll) et une consommation de carburant spécifique (beENG) du moteur au point de fonctionnement actuel, au moyen d'une courbe caractéristique inverse ($fv^{-1}$) pour une partie (fv) dépendante de la vitesse de la résistance au roulage.

3. Procédé selon la revendication 2,
   **caractérisé en ce que**
   la force d'entraînement maximale ($F_{BEsol}$) du véhicule est corrigée par une partie ($F\alpha$) indépendante de la vitesse de la résistance au roulage.

4. Procédé selon la revendication 3,
   **caractérisé en ce que**
   la partie indépendante de la vitesse ($F\alpha$) de la résistance au roulage est déterminée à partir d'une force d'entraînement actuelle (FAN) du véhicule moins la partie dépendante de la vitesse (fv) de la résistance au roulage et la force d'inertie du véhicule.

5. Procédé selon la revendication 3 ou 4,
**caractérisé en ce que**
la partie indépendante de la vitesse (F$\alpha$) de la résistance au roulage est filtrée, en particulier à l'aide d'un filtre passe-bas (5) de premier ordre.

6. Procédé selon la revendication 4 ou 5,
**caractérisé en ce que**
la force d'entraînement actuelle (FAN) est déterminée à partir d'un couple moteur réel (Miist), d'un rayon de roue ($r_{Rad}$) et d'un facteur de démultiplication de la boite de vitesses (üist).

7. Procédé selon l'une des revendications 2 à 6,
**caractérisé en ce que**
la consommation de carburant spécifique (beENG) est déterminée à partir d'un champ de caractéristiques en fonction d'un régime moteur (nmot) et d'un couple moteur réel (Miist).

8. Procédé selon l'une des revendications précédentes,
**caractérisé en ce que**
la limitation de la vitesse de conduite est réalisée en fonction de la consommation de carburant maximale prédéterminée (Besoll) uniquement lorsque le gradient d'une position de la pédale d'accélérateur est inférieure à une valeur prédéterminée ou qu'une fonction de rétrogradation forcée (B_kdown) est désactivée.

9. Dispositif (10) de limitation de la vitesse de conduite d'un véhicule automobile, comportant des moyens (15, 30) de limitation de la vitesse de conduite à une valeur maximale (vmaxbe), à laquelle une consommation de carburant maximale prédéterminée (Besoll) pour une vitesse de conduite stationnaire n'est pas dépassée, et qui pour une vitesse de conduite inférieure à la valeur maximale (vmaxbe), n'effectuent aucune limitation de l'accélération du véhicule en fonction de la consommation de carburant maximale prédéterminée (Besoll).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0359677 A
- DE 10024231 A